# FASCICULE DE BREVET EUROPEEN

(11) **EP 3 114 423 B1**
(45) Date de publication et mention de la délivrance du brevet: **15.04.2020**
(21) Numéro de dépôt: 15707650.6
(22) Date de dépôt: 04.03.2015
(51) Int. Cl.: B64C 39/02, H04N 5/232, G05D 1/00, G01S 3/786

(54) **PROCÉDÉ DE CONTRÔLE D'UN SYSTÈME DE DÉTECTION ET DE SUIVI D'UNE CIBLE**
VERFAHREN ZUR STEUERUNG EINES SYSTEMS ZUR ERKENNUNG UND VERFOLGUNG EINES ZIELS
METHOD FOR CONTROLLING A SYSTEM FOR DETECTING AND TRACKING A TARGET

(30) Priorité: 04.03.2014 FR 1400536
(43) Date de publication de la demande: 11.01.2017
(73) Titulaire: THALES, 92400 Courbevoie (FR)
(72) Inventeur: GALIMBERTI, Arnaud, F-91767 Palaiseau Cedex (FR); LE BARZ, Cédric, F-91767 Palaiseau Cedex (FR); GOUDOU, Jean-François, F-91767 Palaiseau Cedex (FR)
(74) Mandataire: Lavoix
(86) Numéro de dépôt international: PCT/EP2015/054466
(87) Numéro de publication internationale: WO 2015/132281

(56) Documents cités:
- EP-A1- 2 056 059
- EP-A1- 2 056 059
- JP-A- 2000 194 417
- JP-A- 2000 194 417
- US-A1- 2005 110 621

## Description

La présente invention concerne un procédé de contrôle d'un système de détection et de suivi d'une cible. La présente invention se rapporte également à un programme d'ordinateur propre à mettre en œuvre le procédé de contrôle et à un poste de contrôle propre à mettre en œuvre le procédé de contrôle.

Certaines applications de sécurité impliquent le suivi d'une cible d'intérêt. La cible d'intérêt est, par exemple, une personne ou un véhicule. Un tel suivi est souvent réalisé par un opérateur analysant les images transmises par une caméra mobile embarquée dans un drone. Un drone (aussi désigné par l'acronyme anglais UAV signifiant « Unmanned Aerial Vehicle » soit véhicule aérien sans pilote en français) est un aérodyne télécommandé qui emporte une charge utile, destinée à des missions de surveillance, de renseignement, de combat ou de transport.

EP 2056059 A1 divulgue un procédé de contrôle d'un système de détection et de suivi d'une cible.

Toutefois, le travail de surveillance de l'opérateur est fastidieux car il implique une attention permanente. Il est donc souhaitable d'assurer un suivi automatique de cible qui soit robuste. Un tel suivi automatique correspond à une tâche de poursuite dans lequel il est demandé à un drone de suivre une cible mobile dans un environnement inconnu.

Pour assurer un suivi automatique robuste, plusieurs difficultés surviennent. Des problèmes liés aux mouvements brusques du drone causés par des perturbations aérologiques se posent d'abord. De tels mouvements brusques peuvent entrainer, d'une part, un flou de bougé sur les images acquises par la caméra et d'autre part, une difficulté pour l'électronique, chargée d'asservir en position le drone. Ces perturbations sont d'autant plus sensibles dans le cadre d'un mini-drone. L'expression « mini-drone » désigne un drone présentant une dimension inférieure à 1 mètre.

En effet, le changement de trajectoire d'un drone ne peut être immédiat.

Ceci pose également le problème de la qualité des images et de la détection de la cible voulue, la cible pouvant être masquée temporairement partiellement ou totalement. C'est notamment le cas d'une voiture passant sous un pont.

Pour gérer de telles difficultés, il est connu d'utiliser des méthodes d'asservissement visuelles indirectes. Les asservissements visuels directs correspondent au cas où des informations visuelles sont utilisées pour asservir le drone. Le correcteur de l'asservissement visuel communique directement avec les actionneurs du drone. Dans ce cas, la cadence de l'image est relativement élevée. A contrario, dans le cas d'un asservissement visuel indirect, la dynamique du drone est déjà régulée en interne à une fréquence élevée. De ce fait, la cadence de l'image est moins élevée, généralement de l'ordre de quelques dizaines de Hertz.

Toutefois, ces méthodes d'asservissement visuelles indirectes ne permettent pas de gérer les brusques mouvements de la caméra dus aux perturbations aérologiques subies par un mobile.

Il existe donc un besoin pour un procédé permettant de mieux prendre en compte les situations réelles se posant à un mobile autonome sans pilote, notamment un drone.

A cet effet, il est proposé un procédé de contrôle d'un système de détection et de suivi d'une cible selon la revendication 1.

Suivant des modes de réalisation particuliers, le procédé de contrôle comprend une ou plusieurs des caractéristiques suivantes, prise(s) isolément suivant toutes les combinaisons techniquement possibles :
- la première loi de commande de ladite au moins une caméra est propre à maintenir la cible au centre de l'image acquise par ladite au moins une caméra.
- le ou les paramètres relatifs au système sont choisis dans un groupe constitué des paramètres relatifs audit au moins un mobile, par exemple la nature du mobile et les données de navigation, et des paramètres relatifs à ladite au moins une caméra.
- le ou les paramètres relatifs à la cible comportent la nature de la cible et des paramètres relatifs au mouvement éventuel de la cible.
- les paramètres relatifs à l'environnement du système sont des paramètres relatifs à la nature de l'environnement du système ou des données météorologiques de l'environnement du système.

L'invention concerne ici un programme d'ordinateur selon la revendication 6.

En outre, l'invention se rapporte aussi à un poste de contrôle d'un système de détection et de suivi d'une cible selon la revendication 7.

Suivant des modes de réalisation particuliers, le poste de contrôle comprend une ou plusieurs des caractéristiques suivantes, prise(s) isolément suivant toutes les combinaisons techniquement possibles :
- un dispositif d'affichage configuré pour l'affichage d'éléments graphiques dont des éléments graphiques actifs configurés pour l'interaction d'un opérateur avec le poste de contrôle et/ou un ou plusieurs mobiles, une interface de commande pour la saisie par l'opérateur de commandes à destination du poste de contrôle, et un oculomètre configuré pour détecter la direction du regard de l'opérateur, le poste de contrôle étant configuré pour sélectivement activer l'un d'une pluralité de premiers modes de fonctionnement du poste de contrôle respectivement associés à l'un des éléments graphiques actifs en réponse à la détection du regard de l'opérateur sur l'élément graphique actif correspondant, chaque premier mode de fonctionnement étant configuré pour permettre à l'opérateur d'interagir avec un ou plusieurs éléments graphiques et/ou un ou plusieurs mobiles via l'interface de commande selon un ensemble de fonctionnalités donné.
- les éléments graphiques actifs comprennent une pluralité de flux vidéo respectivement fournis par l'un des mobiles et simultanément affichés via le dispositif d'affichage, chaque mobile contrôlé par le poste de contrôle fournissant au moins un flux vidéo, les premiers modes de fonctionnement correspondant aux flux vidéo permettant à l'opérateur d'interagir avec les flux vidéo et au moins le mobile fournissant le flux vidéo correspondant selon un premier ensemble de fonctionnalités.
- l'agencement relatif des flux vidéo sur le dispositif d'affichage est utilisé, en complément de la position du regard de l'opérateur détectée par l'oculomètre, comme donnée d'entrée d'une ou plusieurs fonctionnalités d'au moins un ensemble de fonctionnalités associé à un élément graphique actif.

- le premier ensemble de fonctionnalités comprend un ou plusieurs éléments du groupe formé par : une fonction de modification de l'agencement relatif des flux vidéo sur le dispositif d'affichage, une fonction de modification de l'orientation et/ou du niveau de grossissement d'une caméra d'acquisition embarquée à bord d'un mobile, une fonction de basculement entre deux modes de fonctionnement d'un mobile.
- l'interface de commande comprend une surface tactile.
- l'interface de commande comprend une tablette d'affichage tactile configurée pour l'affichage d'informations relatives aux mobiles.
- tout ou partie des fonctionnalités des premiers modes de fonctionnement du poste de contrôle sont déclenchées par la réalisation via la surface tactile d'un geste ou d'une séquence de gestes du groupe formé par : la mise en contact d'un ou plusieurs doigts avec la surface tactile, le déplacement d'un doigt sensiblement selon une direction sur la surface tactile, le déplacement conjoint de plusieurs doigts sensiblement selon une direction sur la surface tactile, le déplacement de deux ou plus de doigts les uns relativement aux autres sur la surface tactile, le tapotement successif d'un ou plusieurs doigts sur la surface tactile.
- le poste de contrôle est configuré pour activer un deuxième mode de fonctionnement en réponse à la détection du regard de l'opérateur dans une direction autre que celle du dispositif et dans lequel l'opérateur interagit avec un ou plusieurs mobiles via l'interface de commande.
- le deuxième mode de fonctionnement est configuré pour l'interaction de l'opérateur avec un ou plusieurs mobiles selon un deuxième ensemble de fonctionnalités, le deuxième ensemble de fonctionnalités comprenant au moins une fonctionnalité différente des fonctionnalités des ensembles de fonctionnalités des premiers modes de fonctionnement du poste de contrôle.
- le poste de contrôle est configuré pour modifier l'apparence d'un ou plusieurs éléments graphiques en réponse à la détection du regard de l'opérateur dans la direction correspondante, et pour modifier l'apparence de l'interface de commande en réponse à la détection du regard de l'opérateur dans une direction autre que celle d'un élément graphique actif.

En outre, il est également proposé un ensemble comportant un système de détection et de suivi d'une cible selon la revendication 9.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un système de détection et de suivi d'une cible et d'un poste de contrôle du système de détection et de suivi,
- figure 2, un schéma bloc illustrant l'asservissement de la caméra et du mobile du système de détection et de suivi illustré par la figure 1,
- figure 3, une illustration schématique d'un exemple de poste de contrôle, et
- figures 4 à 8, des représentations schématiques de gestes réalisables par un opérateur pour interagir avec le poste de contrôle de la figure 3.

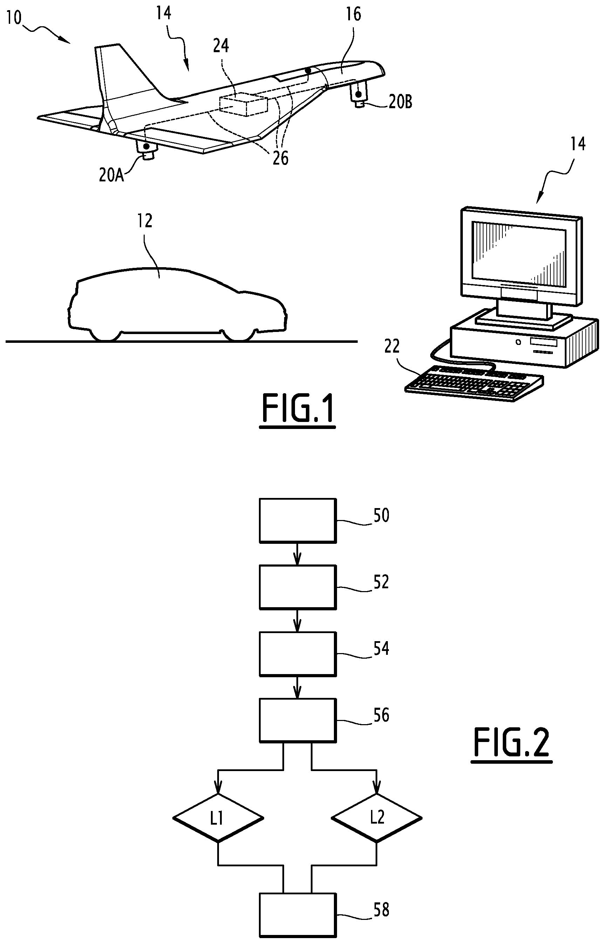

Un système de détection et de suivi 10 d'une cible 12 ainsi qu'un poste de contrôle 14 sont représentés à la figure 1.

Le système de détection et de suivi 10 est ci-après dénommé le système 10.

Le système 10 est propre à assurer la détection de la cible 12 et le suivi de la cible 12.

Le système 10 comporte un mobile 16 et une pluralité de caméras 20.

Un mobile 16 est, selon les cas, aéroporté, terrestre ou encore sous-marin.

En l'occurrence, le mobile 16 est un drone permettant de survoler une zone pour la surveiller. Selon les modes de réalisation, le mobile 16 est un drone à voilure tournante ou fixe.

Dans l'exemple de la figure 1, le mobile 16 est muni de deux caméras 20A et 20B. En variante, le mobile 16 est muni de plus de deux caméras ou d'une seule caméra.

Chaque caméra 20A et 20B est propre à acquérir une ou plusieurs images de la cible 12.

Dans le cas de la figure 1, les deux caméras 20A et 20B sont hétérogènes. Il est entendu par le terme « hétérogène » dans ce contexte que les domaines de sensibilité spectrale préférés des caméras 20A et 20B sont disjoints. Un domaine de sensibilité spectrale préféré correspond à un intervalle spectral pour lequel l'efficacité quantique de la caméra considéré est plus élevée que pour les autres bandes spectrales dans lesquelles la caméra a la capacité de détecter un photon. Cette propriété octroie au système 10 une sensibilité multispectrale permettant d'assurer une meilleure détection de la cible 12 ainsi qu'un meilleur suivi de la cible 12.

Par exemple, la première caméra 20A est propre à détecter des photons appartenant à la bande du visible, c'est-à-dire des photons associés à une longueur d'onde comprise entre 400 nanomètres (nm) et 800 nm. A contrario, la deuxième caméra 20B est à détecter des photons appartenant à la bande infrarouge, c'est-à-dire des photons associés à une longueur d'onde est supérieure à 800 nm.

En outre, selon l'exemple de la figure 1, chaque caméra 20A et 20B est mobile par rapport au mobile 16.

A titre d'illustration, chaque caméra 20A et 20B est montée de rotative par rapport à la coque du mobile 16.

Dans la suite, il est considéré que chaque caméra 20A et 20B possède un axe optique, la direction de l'axe optique dans un repère lié au mobile 16 définissant l'orientation d'une caméra 20A et 20B.

La cible 12 est une cible d'intérêt au regard d'une mission prévue.

Par exemple, la cible 12 est une personne ou un véhicule.

Le poste de contrôle 14 est propre à contrôler le système 10. Plus précisément, dans le cas de la figure 1, le poste de contrôle 14 est propre à contrôler le mobile 16 et les caméras 20A et 20B.

Le poste de contrôle 14 comporte une unité de saisie 22 et un contrôleur 24.

L'unité de saisie 22 est, selon un exemple particulier, un clavier d'ordinateur.

En variante, l'unité de saisie 22 est un écran tactile.

Un opérateur a la possibilité de saisir des paramètres dans le contrôleur 24 via l'unité de saisie 22.

Le contrôleur 24 est propre à contrôler le mobile 16 et les caméras 20A et 20B ainsi que l'indique les traits pointillés 26.

Dans le cas particulier de la figure 1, le contrôleur 24 fait partie du mobile 16. Autrement formulé, le contrôleur 24 est un contrôleur embarqué.

Le fonctionnement du poste de contrôle 14, et en particulier du contrôleur 24, est maintenant décrit en référence à un procédé de contrôle du système 10 tel qu'illustré par l'ordinogramme de la figure 2.

Le procédé de contrôle comporte une étape 50 de fourniture d'au moins un paramètre.

L'étape 50 de fourniture est, par exemple, mise en œuvre par la saisie du paramètre par un opérateur dans l'unité de saisie 22. Les paramètres saisis sont alors fournis au calculateur 24.

Le paramètre est choisi dans le groupe de paramètre constitué de paramètres relatifs au système 10, à la cible 12 et à l'environnement du système 10. Cela signifie que le paramètre est relatif au système 10, à la cible 12 et à l'environnement du système 10.

Le paramètre est relatif au système 10 si le paramètre est relatif au mobile 16 ou à l'une des deux caméras 20A et 20B.

Parmi les paramètres relatifs au mobile 16, la nature du mobile 16, les données de navigation et les capacités du mobile 16 sont des exemples.

En précisant la nature du mobile 16, il s'agit de mettre en évidence si le mobile 16 est un sous-marin ou un drone. En variante, il est précisé si le mobile 16 est à voilure fixe ou à voilure tournante.

Les données de navigation comprennent différents éléments relatifs à la situation du mobile 16 et varient selon les situations considérées.

A titre d'exemple, dans le cas d'un drone, les données de navigation comprennent une donnée relative à la configuration du mobile 16 ou aux paramètres physiques de l'air à proximité du mobile 16, par exemple la température de l'air, la pression de l'air, ou encore la vitesse de l'air par rapport au mobile 16. De manière alternative ou complémentaire, l'angle de roulis, l'angle de tangage et le cap sont fournis pour le mobile 16. Tout autre paramètre permettant de prédire la trajectoire du mobile 16 est considéré comme faisant partie des paramètres de navigation.

Dans le cas de la figure 1, il est supposé que la position GPS du mobile 16 et l'altitude du mobile 16 sont fournies. De telles données sont respectivement fournies par un système GPS et un radioaltimètre. D'autres capteurs permettent également d'accéder à de telles grandeurs physiques.

Les capacités du mobile 16 sont des données exprimant les possibilités du mobile 16. A titre d'exemple, l'autonomie en carburant, l'angle minimum de virage possible pour le mobile 16 la vitesse minimale du mobile 16 ou la vitesse maximale du mobile 16 sont des capacités du mobile 16. De même, dans le cas d'un drone, l'altitude minimale ou l'altitude maximale sont également des capacités du mobile 16.

Parmi les paramètres relatifs aux caméras 20A et 20B, l'orientation de la caméra considérée 20A et 20B est un exemple. Le domaine de sensibilité spectrale préféré de la caméra 20A et 20B est un autre exemple. En variante, le paramètre est représentatif du ou des filtrages appliqués par la caméra 20A et 20B aux images que la caméra 20A et 20B est propre à acquérir.

Les paramètres relatifs à la cible 12 indiquent des propriétés de la cible12.

A titre d'exemple, il s'agit de préciser la nature de la cible 12. Par exemple, la cible est une voiture ou une personne. Une telle indication confère des indications sur la forme à reconnaitre et à identifier, ce qui permet de faciliter la détection de la cible 12.

Selon un autre exemple, les paramètres relatifs à la cible 12 concernent plus spécifiquement l'évolution temporelle de la cible 12. Par exemple, le mouvement de la cible 12 est caractérisé. Des variables comme la trajectoire ou la vitesse de la cible 12 sont fournies. Il est, selon un mode de réalisation préféré, également indiqué si la cible 12 risque d'être masquée.

Les paramètres relatifs à l'environnement comprennent notamment des données relatives à la nature de l'environnement et à des données météorologiques de l'environnement.

Par exemple, pour la nature de l'environnement, les données permettent au contrôleur 24 de savoir si le mobile 16 évolue dans un environnement intérieur ou extérieur. Il est également envisageable de préciser si l'environnement est une plaine, une montagne, une ville, un désert.

Les données météorologiques comportent notamment des données relatives à la pluviométrie, aux températures extérieures, à la présence de nuage ou à la quantité de soleil. Les paramètres liés au vent (dont la force du vent, la direction du vent ou autres) sont d'autres exemples de données météorologiques.

Le procédé comporte également une étape 52 de fourniture des images acquises par les caméras 20A et 20B.

Le procédé de contrôle comporte également une étape 54 de sélection d'un algorithme parmi une pluralité d'algorithmes de détection et de suivi d'une cible en fonction du moins par un paramètre fourni à l'étape 52 de fourniture d'un paramètre.

A titre d'exemple, des algorithmes de détection et de suivi basés sur la technique du meanshift (la technique du meanshift est notamment détaillé dans l'article intitulé « Mean Shift: A Robust Approach Toward Feature Space Analysis » de Dorin Comaniciu et Peter Meer dans la revue IEEE Transactions on Pattern Analysis and Machine Intelligence - PAMI, vol. 24, no. 5, pp. 603-619, 2002), basés sur une soustraction du fond avec compensation de mouvements ou l'algorithme Track Learn and Detect (l'algorithme Track Learn and Detect est notamment détaillé dans l'article intitulé « Tracking-learning-detection » de Zdenek Kalal, Krystian Mikolajczyk et Jiri Matas dans la revue IEEE Transactions on Pattern Analysis and Machine Intelligence - PAMI, vol. 34, no. 7, pp. 1409-1422, 2012) sont des exemples d'algorithmes de détection et de suivi d'une cible.

Selon un mode de réalisation préféré, les algorithmes de détection et de suivi considéré à l'étape 54 de sélection incluent également un algorithme de traitement des images fournies à l'étape 52 de fourniture des images. Un tel traitement permet usuellement de filtrer les images acquises par les caméras 20A et 20B pour améliorer la qualité des images.

Selon un autre mode de réalisation, en cas de perte de la cible 12 pendant un temps prédéterminé, les algorithmes de détection et de suivi permettent également de rechercher dans l'environnement pour retrouver la cible 12.

Le paramètre est pris en compte dans la sélection de l'algorithme. A titre d'exemple, une telle prise en compte est mise en œuvre par minimisation d'une fonction de coût. Pour cela, le paramètre fourni est converti en un critère à respecter. Par exemple, si le paramètre est la pluviométrie, l'algorithme permettant de minimiser le temps de vol du mobile 16 est privilégié si la pluviométrie dépasse un seuil donnée. De manière alternative, il est choisi l'algorithme respectant le mieux les conditions de luminosité prévues lors de la mise en œuvre de la mission du mobile 16. La fonction de coût consiste à mesurer l'écart entre chaque algorithme possible et un algorithme idéal qui respecterait le critère.

A l'issue de l'étape 54 de sélection, un algorithme a été sélectionné. L'algorithme sélectionné est l'algorithme qui respecte le mieux le critère correspondant au paramètre fourni.

Le procédé comprend alors une étape 56 de mise en œuvre de l'algorithme de détection et de suivi de la cible 12.

Une telle mise en œuvre permet d'obtenir des lois de commandes du système 10. Plus précisément, une première loi de commande L1 des deux caméras 20A et 20B et une deuxième loi de commande L2 du mobile 16 sont obtenues.

De préférence, la première loi de commande L1 des caméras 20A et 20B est choisie pour maintenir la cible 12 au centre de l'image acquise par les caméras 20A et 20B. L'algorithme de détection et de suivi de la cible 12 permet de prédire la prochaine localisation de la cible 12. En fonction de la position du mobile 16 et de l'orientation de la caméra 20A et 20B, il est possible de déterminer une orientation pour les caméras 20A et 20B telle que la cible 12 reste au centre de l'image.

Selon un mode de réalisation avantageux, la deuxième loi de commande L2 du mobile 16 ne prend pas en compte l'image acquise par les caméras 20A et 20B. Il est entendu par une telle expression que la deuxième loi de commande L2 n'effectue pas de calculs sur l'image acquise par les caméras 20A et 20B. Toutefois, cela n'exclut pas que la deuxième loi de commande L2 prenne en compte des données obtenues par des calculs effectuées sur l'image acquise par les caméras 20A et 20B.

La deuxième loi de commande L2 prend en compte l'orientation obtenue en calculant la première loi de commande L1 des caméras 20A et 20B.

Par exemple, selon un procédé de commande non décrit dans le cadre de cette invention, une orientation souhaitée pour le mobile 16 est connue. Une telle orientation dépend par exemple du sens du vent. Dans ce cas, la deuxième loi de commande L2 prend en compte l'orientation obtenue en calculant la première loi de commande L1 des caméras 20A et 20B et l'orientation souhaitée du mobile 16. Cela permet de bien prendre en compte la dynamique propre du mobile 16 tout en évitant que la caméra 20A ou la caméra 20B ne puisse plus modifier l'orientation de son axe optique du fait d'une possibilité réduite de mouvement. En effet, si la cible 12 se déplace rapidement sur la droite, le mobile 16 est dans l'incapacité de suivre avec la même rapidité le mouvement sous peine de décrochage. La caméra 20A permet alors de suivre le mouvement rapide de la cible 12, le temps que le mobile 16 puisse s'orienter vers la droite en toute sécurité.

Pour améliorer cet effet, la deuxième loi de commande L2 correspond à la différence entre l'orientation de la caméra et l'orientation souhaitée du mobile 16.

Pour améliorer encore plus cet effet, la deuxième loi de commande L2 correspond au résultat d'un filtrage de la différence entre l'orientation de la caméra et l'orientation souhaitée du mobile 16 en utilisant un filtre de Kalman.

A l'issue de l'étape 56 de mise en œuvre, deux lois de commandes L1 et L2 sont donc obtenus.

Le procédé de contrôle comporte une étape 58 de contrôle du système 10. L'étape 58 de contrôle consiste à contrôler les différentes caméras 20A, 20B en fonction de la deuxième loi de commande L2 et à contrôler le mobile 16 en fonction de la première loi de commande L1.

Ainsi, le procédé de contrôle permet d'obtenir un algorithme de détection et de suivi adapté à la situation spécifique. Une telle adaptation concerne le système 10, la cible 12 ou l'environnement du système 10. Cela permet de mieux détecter la cible 12 et facilite le suivi de la cible 12. En effet, le procédé permet également le suivi de la cible 12 dans toutes les directions. En particulier, le suivi dans des directions latérales, c'est-à-dire orthogonale à la direction générale de déplacement du mobile 16, est possible en spécifiant une orientation des caméras 20A et 20B appropriée.

Pour améliorer l'adaptation à la situation étudiée, il est préférable que le procédé comprenne la fourniture de plusieurs paramètres à l'étape 50 de fourniture de paramètres. Pour cela, il suffit de modifier la fonction de coût à l'étape 54 de sélection pour en faire une fonction de coût prenant en compte plusieurs critères. De plus, selon un mode de réalisation préféré, il est possible de pondérer les critères selon les besoins de l'opérateur.

Il est aussi à noter que, comme l'asservissement du mobile 16 est relativement indépendant de l'asservissement des caméras 20A et 20B, le procédé permet de garantir la position de la cible 12 tout en respectant la dynamique interne du mobile 16. Les risques de détérioration du mobile 16 sont donc diminués.

Le procédé peut être mis en œuvre sur le calculateur 24 précédemment décrit. Le calculateur 24 est une carte de traitement embarquée dans le mobile 16 effectuant les traitements directement sur le mobile 16.

Selon un autre mode de réalisation, le calculateur 24 fait partie d'un ordinateur au sol récupérant les données et les échangeant avec le système 10. Dans ce cas, le calculateur 24 est, selon un exemple, particulier un processeur dans lequel est mis en œuvre un programme d'ordinateur adapté.

Enfin, il est remarquable que le procédé décrit s'applique à tout type de mobile 16 connu. S'il a été plus précisément décrit des exemples liés aux cas des drones, ceci n'est nullement limitatif, l'homme du métier étant capable d'adapter les exemples présentés aux cas de mobiles 16 terrestres ou sous-marins.

En outre, le procédé permet également de contrôler des systèmes 10 comprenant une pluralité de mobiles 16.

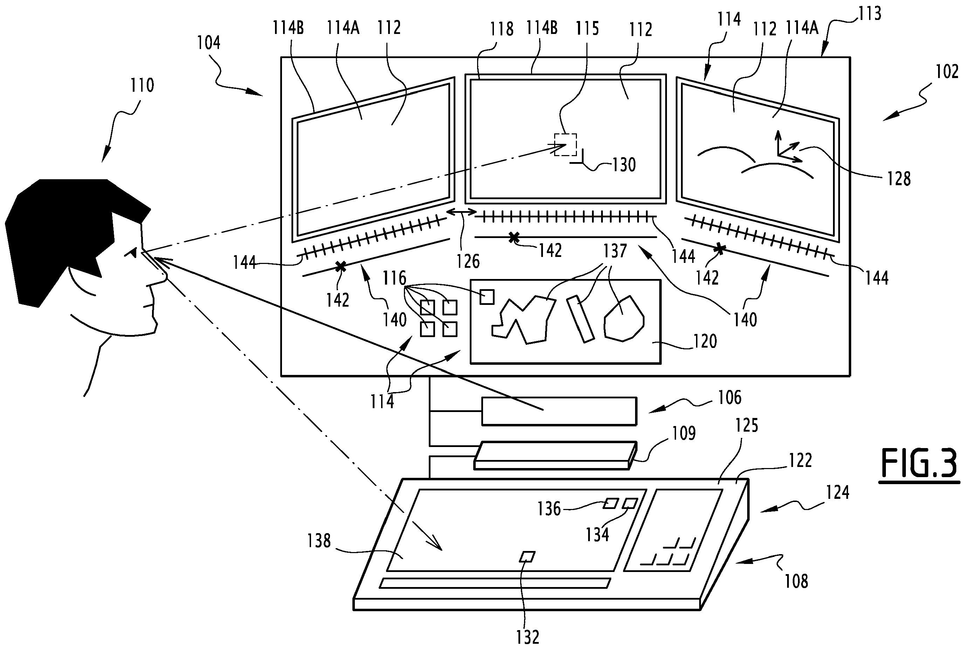

Dans ce cas, il est particulièrement favorable d'utiliser un poste de contrôle 102 d'une pluralité de mobiles, ci après poste 102 tel qu'illustré par la figure 3.

Le poste 102 comprend un dispositif d'affichage 104, ci-après dispositif 104, un oculomètre 106 ainsi qu'une interface de commande 108. En outre, le dispositif 102 comprend des éléments de traitement 109. Le poste 102 est manipulé par un opérateur 110.

Le poste 102 permet à l'opérateur 110 d'interagir avec une flotte de mobiles (non représentés) à chacun desquels est associé au moins un flux vidéo 112.

Chaque flux vidéo 112 est issu d'une caméra embarquée à bord du mobile correspondant et a vocation à permettre la visualisation sur le dispositif 104 d'une zone surveillée par le mobile.

Par exemple, le poste 102 permet le contrôle simultané de deux mobiles, trois mobiles ou plus de trois mobiles.

Le dispositif 104 est configuré pour réaliser l'affichage d'éléments graphiques 114.

Les éléments graphiques 114 correspondent aux objets générés par le poste 102 et affichés sur le dispositif 104 lors de son fonctionnement.

Les éléments graphiques 114 renseignent l'opérateur 110 sur les mobiles et/ou le poste 102. Les éléments graphiques 114 comprennent des éléments graphiques actifs 114A configurés pour également permettre à l'opérateur d'interagir avec le poste 102 et/ou les mobiles via des fonctionnalités déclenchables par l'opérateur 110 par l'intermédiaire de l'interface de commande 108. Les éléments graphiques 114 comprennent également des éléments graphiques passifs 114B qui ne sont pas configurés pour l'interaction de l'opérateur avec le poste 102 ou les mobiles.

Les éléments graphiques actifs 114A comprennent les flux vidéo 112 fournis par les mobiles contrôlés par le poste 102. Le dispositif 104 est configuré pour afficher simultanément les flux vidéo 112.

Dans certains modes de réalisation, les éléments graphiques actifs 114A comprennent également un ou plusieurs symboles 115 en surimpression sur le flux vidéo 112 correspondant. Un symbole 115 est associé à certains points remarquables des images du flux vidéo, tels que par exemple une cible que le mobile correspondant a vocation à détecter. Un symbole 115 du flux vidéo 112 se présente par exemple sous la forme d'un cadre en trait plein ou pointillé. Le symbole 115 est généré par le mobile lui-même lors de la capture des images, ou encore par le poste 102 une fois le flux vidéo 112 reçu.

Les éléments graphiques actifs 114A comprennent également des boutons 116 virtuels.

Les éléments graphiques passifs 114B comprennent des contours 118 respectivement associés à un flux vidéo 112 et qui en délimitent le bord. En outre, les éléments graphiques passifs 114B comprennent une carte de navigation 120. La carte de navigation 120 renseigne l'opérateur sur l'emplacement des mobiles contrôlés par le poste 102.

Dans certains modes de réalisation, au moins un élément graphique actif 114A est affiché en surimpression sur un élément graphique passif 114B.

Par exemple, un bouton 116 est affiché en surimpression sur la carte de navigation 120.

Le dispositif 104 comprend un écran d'affichage 113. En variante, le dispositif 104 comprend au moins deux écrans d'affichage 113 entre lesquels les flux vidéos 112 sont répartis.

L'oculomètre 106 est configuré pour détecter la direction du regard de l'opérateur 110. Plus précisément, l'oculomètre 106 est configuré pour détecter que le regard de l'opérateur 110 porte ou non sur le dispositif 104. L'oculomètre 106 est en outre configuré pour détecter l'élément graphique 114 sur lequel porte le regard de l'opérateur 110 lorsque celui-ci regarde le dispositif 104.

L'interface de commande 108 est configurée pour permettre à l'opérateur 110 de saisir des commandes pour interagir avec le poste 102. Plus spécifiquement, l'interface de commande 108 est configurée pour permettre des interactions avec les éléments graphiques actifs 114A.

Préférentiellement, l'interface de commande 108 comprend une surface tactile 122.

Avantageusement, en référence à la Figure 3, l'interface de commande 108 comprend une tablette 124 d'affichage pourvue d'une surface tactile 122.

Par exemple, la tablette 124 présente une face supérieure 125 qui correspond à la surface tactile 122 et est simultanément configurée pour réaliser l'affichage d'informations relatives aux mobiles ou au fonctionnement du poste 102.

Ces modes de réalisation permettent de minimiser le nombre d'équipements du poste 102 et donc son coût, tout en améliorant son ergonomie.

Les éléments de traitement 109 sont raccordés au dispositif 104, à l'oculomètre 106 et à l'interface de commande 108. Les éléments de traitement 109 sont configurés pour prendre en charge le fonctionnement de ces divers équipements. Par exemple, les éléments de traitement 109 comprennent un dispositif informatique comportant un processeur et une mémoire (non représentés) comprenant des logiciels qui, lorsqu'ils sont exécutés par le processeur, permettent le fonctionnement du poste 102 dans son ensemble.

Les éléments de traitement 109 sont configurés pour sélectivement activer l'un d'une pluralité de premiers modes de fonctionnement du poste 102 respectivement associés à un élément graphique actif 114A en réponse à la détection, par l'oculomètre 106, du regard de l'opérateur sur l'élément graphique actif 114A correspondant.

A chaque premier mode de fonctionnement du poste 102 est associé un ensemble de fonctionnalités via lesquelles l'opérateur interagit avec un ou plusieurs éléments graphiques 114 et/ou un ou plusieurs mobiles.

Un premier mode de fonctionnement actif est désactivé en réponse à la détection du regard de l'opérateur dans une direction autre que celle de l'élément graphique actif 114A correspondant, ou à l'issue de l'exécution d'une fonctionnalité du premier mode de fonctionnement en question.

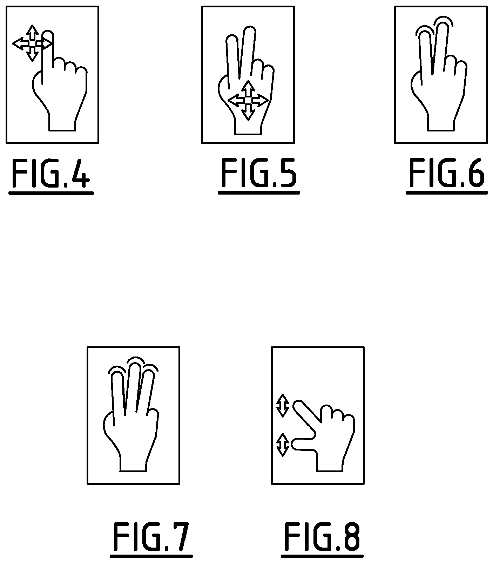

En référence aux Figures 4 à 8, une ou plusieurs des fonctionnalités des ensembles de fonctionnalités associés aux premiers modes de fonctionnements du poste 102 sont déclenchées par la réalisation via la surface tactile 122 de l'interface de commande 108 d'un geste ou d'une séquence de gestes du groupe formé par : la mise en contact d'un ou plusieurs doigts avec la surface tactile, le déplacement d'un doigt de l'opérateur 110 sensiblement selon une direction sur la surface tactile 122 (figure 4), le déplacement conjoint de plusieurs doigts sensiblement selon une direction sur la surface tactile 122 (figure 5), le tapotement successif d'un ou plusieurs doigts sur la surface tactile 122 (figures 6 et 7), le déplacement de deux ou plus de doigts de l'opérateur les uns relativement aux autres sur la surface tactile 122 (figure 8).

A noter que les fonctionnalités associées aux premiers modes de fonctionnement sont déclenchées par la réalisation simultanée du ou des gestes correspondants via la surface tactile 122 et la fixation du regard de l'opérateur sur l'élément graphique actif 114A associé au premier mode de fonctionnement correspondant au moins au commencement de la réalisation du geste ou du premier des gestes correspondants.

En particulier, les éléments de traitement 109 sont configurés pour sélectivement activer l'un d'une pluralité de premiers modes de fonctionnement respectivement associés à l'un des flux vidéo 112 affichés sur le dispositif 104 pour l'interaction de l'opérateur 110 avec les flux vidéos 112 et au moins le mobile fournissant le flux vidéo 112 correspondant. Chacun de ces modes de fonctionnement est déclenché en réponse à la détection du regard de l'opérateur sur le flux vidéo 112 correspondant.

Par exemple, les premiers modes de fonctionnement associés aux flux vidéo 112 sont tous associés à un premier ensemble de fonctionnalités.

Le premier ensemble de fonctionnalités comprend un ou plusieurs des éléments du groupe formé par : une fonction de modification de l'agencement relatif des flux vidéo 112 (symbolisée par une flèche 126 sur la figure 3), une fonction de modification de l'orientation et/ou du niveau de grossissement d'un flux vidéo 112 (symbolisée par un repère 128 sur la figure 3), une fonction de basculement entre deux modes de fonctionnement d'un mobile dont le flux vidéo 112 est visualisable sur le dispositif 104 (représentée par un symbole 130 sur la figure 3).

Par exemple, la fonction de modification d'agencement relatif des flux vidéo 112 permet à l'opérateur de modifier l'ordre ou l'emplacement des flux vidéo 112 sur le dispositif 104.

Dans certains modes de réalisation, l'agencement relatif des flux vidéo 112 sur le dispositif 104 est utilisé comme donnée d'entrée d'une ou plusieurs fonctionnalités associées à un ou plusieurs éléments graphiques actifs 114A en complément de la position du regard de l'opérateur détectée par l'oculomètre 106. Par exemple, dans le cas d'une juxtaposition de flux vidéo 112, l'exécution d'une fonctionnalité donnée relative à un élément graphique actif 114A déclenche une action impactant un flux vidéo 112 situé à emplacement prédéterminé dans la juxtaposition, par exemple le flux vidéo 112 central pour un nombre impair de flux vidéo 112, et/ou impactant le mobile fournissant le flux vidéo correspondant. Ceci permet de simplifier le traitement réalisé par les éléments de traitement 109 et l'ergonomie du poste 102 pour la réalisation de fonctionnalités associées à un élément graphique 114 autre qu'un flux vidéo mais impactant néanmoins un mobile ou un flux vidéo 112 donné.

En outre, la fonction de modification de l'orientation et/ou du niveau de grossissement d'un flux vidéo 112 permet à l'opérateur de déplacer le champ de vision d'une caméra embarquée à bord du mobile et d'en modifier le niveau de grossissement, et donc de modifier le contenu des images du ou des flux vidéo 112 émis par le mobile associé et affiché(s) sur le dispositif 104.

Par ailleurs, la fonction de basculement entre deux modes de fonctionnement d'un mobile permet à l'opérateur de faire basculer un mobile contrôlé par le poste 102 entre deux modes de fonctionnement du mobile. Par exemple, le poste 102 est adapté pour faire basculer un mobile entre un mode de fonctionnement dans lequel le mobile a vocation à détecter les cibles dans le champ d'observation de la ou des caméras à son bord, et un mode de fonctionnement dans lequel le mobile est verrouillé sur une ou plusieurs cibles préalablement détectées. Ce dernier mode de fonctionnement a par exemple pour effet de faire en sorte que le champ d'observation de la ou chaque caméra du mobile demeure centré sur la ou les cibles en question au cours du temps.

Dans certains modes de réalisation, de manière alternative ou complémentaire, la fonction de basculement entre deux modes de fonctionnement d'un mobile est associée à un symbole 115 sur le flux vidéo 112 correspondant.

En outre, les éléments de traitement 109 sont configurés pour activer un deuxième mode de fonctionnement du poste 102 en réponse à la détection du regard de l'opérateur 110 dans une direction autre que celle du dispositif 104. Dans le deuxième mode de fonctionnement, l'opérateur interagit avec un ou plusieurs des mobiles contrôlés par le poste 102 via l'interface de commande 108.

L'interaction de l'opérateur 110 avec le ou les mobiles dans le deuxième mode de fonctionnement est réalisée selon un deuxième ensemble de fonctionnalités. Préférentiellement, le deuxième ensemble de fonctionnalités comprend au moins une fonctionnalité différente des fonctionnalités des ensembles de fonctionnalités associés aux premiers modes de fonctionnement du poste 102. Ceci a pour effet d'accroître le nombre des fonctionnalités accessibles par l'opérateur 110 via le poste 102 tout en ne requérant pas l'adjonction d'éléments supplémentaires, par exemple au niveau de l'interface de commande 108.

Par exemple, comme pour le premier ensemble de fonctionnalités, une ou plusieurs des fonctionnalités du deuxième ensemble de fonctionnalité sont déclenchées par la réalisation via la surface tactile 122 d'un geste ou d'une séquence de gestes du groupe précédemment décrit en référence aux figures 4 à 8.

Par exemple, le deuxième ensemble de fonctionnalités comprend une fonction d'importation d'un mobile en vue de son contrôle par le poste 102, ou encore d'exportation d'un mobile contrôlé par le poste 102 vers un autre poste en vue de son contrôle par ce dernier. Par exemple, pour l'exportation d'un mobile, l'opérateur 110 effectue, sur la surface tactile 122, un geste de glisser-déposer d'une icône 132 (visualisable sur la face supérieure 125 de la tablette 124) associée au mobile à exporter vers une icône d'exportation 134. Pour l'importation d'un mobile, l'opérateur clique sur une icône 136 prévue à cet effet sur l'interface de commande 108. En variante, l'une ou les deux fonctions d'importation et d'exportation sont alternativement ou également associées aux premiers modes de fonctionnement.

Par ailleurs, par exemple, le deuxième ensemble de fonctionnalités comprend une fonction de contrôle individuel et collectif de la navigation des mobiles contrôlés par le poste 102. Le deuxième ensemble de fonctionnalités peut également comprendre une fonction d'exportation d'un flux vidéo 112 vers un autre poste de contrôle.

En outre, les éléments de traitement 109 sont configurés pour modifier l'apparence de tout ou partie des éléments graphiques 114 affichés sur le dispositif 104 et des éléments affichés sur la tablette 124 en réponse à la détection de la direction du regard de l'opérateur 110 ou en réponse à l'exécution d'une fonctionnalité. En particulier, les éléments de traitement 109 sont configurés pour modifier l'apparence de tout ou partie des éléments graphiques actifs 114A et de tout ou partie des éléments graphiques passifs 114B.

Par exemple, les éléments de traitement 109 sont configurés pour modifier la couleur et/ou l'épaisseur du contour 118 d'un flux vidéo 112 en réponse à la détection du regard de l'opérateur dans la direction du flux vidéo 112 en question. Par exemple, le contour 118 voit son épaisseur augmentée, et passe d'une couleur orangée à une couleur bleue. En outre, par exemple, les éléments de traitement 109 modifient l'épaisseur et/ou la couleur d'un élément graphique 114, tel que par exemple un symbole 115, lorsque l'élément graphique 114 en question est regardé par l'opérateur 110. Par exemple, le symbole 115 voit son épaisseur et/ou la nature de son trait modifiée lorsque l'opérateur réalise une commande de basculement d'un mode de fonctionnement du mobile associé vers un autre mode de fonctionnement
Dans certains modes de réalisation, les éléments de traitement 109 modifient également l'éclairage du dispositif 104 en réponse à la détection du regard de l'opérateur en direction du dispositif 104. En outre, le rétro-éclairage de la tablette 124 est également modifié en réponse à la détection du regard de l'opérateur dans une direction autre que celle du dispositif 104.

Dans certains modes de réalisation, les éléments de traitement 109 sont également configurés pour modifier l'apparence d'un élément graphique actif 114A figurant sur un flux vidéo 112 en réponse à la réalisation par l'opérateur d'une ou plusieurs fonctionnalités impliquant l'élément graphique actif 114A en question.

Lors du fonctionnement du poste 102 selon l'invention, l'opérateur 110 active l'un des premiers modes de fonctionnement en regardant un élément graphique actif 114A. Le premier mode de fonctionnement déclenché demeure actif tant que l'opérateur maintient son regard en direction de l'élément graphique actif 114A en question ou tant que l'opérateur ne déclenche pas l'exécution d'une fonctionnalité associée.

L'opérateur peut alors interagir avec les éléments graphiques actifs 114A, notamment les flux vidéo 112, pour interagir avec le poste 102 et/ou les mobiles contrôlés par le poste 102. Pour ce faire, il exécute des fonctionnalités associées au premier mode de fonctionnement en question via l'interface de commande 108. Ces fonctionnalités sont déclenchées par un ou plusieurs des gestes de l'ensemble décrit ci-dessus. Le regard de l'opérateur et les fonctionnalités dont l'opérateur commande l'exécution modifient l'apparence d'un ou plusieurs éléments graphiques 114.

A l'inverse, l'opérateur 110 déclenche le deuxième mode de fonctionnement du poste 102 dès lors que son regard ne porte pas sur le dispositif 104. Le deuxième mode de fonctionnement demeure actif tant que l'opérateur ne porte pas son regard sur un élément graphique actif 114A du dispositif 104 auquel cas le premier mode de fonctionnement associé est activé. L'apparence, par exemple le rétroéclairage, de la surface supérieure de la tablette 124 est modifiée en réponse au déclenchement du deuxième mode de fonctionnement. L'opérateur 110 interagit avec le ou les mobiles via le deuxième ensemble de fonctionnalités, qui sont respectivement déclenchées en réponse à la réalisation d'un ou plusieurs gestes du groupe précédemment décrit via la surface tactile 122.

Le poste 102 selon l'invention présente plusieurs avantages.

Tout d'abord, l'affichage simultané de flux vidéo 112 issus de différents mobiles sur le dispositif 104 permet le contrôle de plusieurs mobiles depuis un unique poste 102. Le coût associé au contrôle d'une flotte de mobiles est donc réduit lorsque mis en œuvre par un poste 102 selon l'invention.

Le recours à un oculomètre 106 permet par ailleurs d'enrichir le fonctionnement du poste 102 tout en améliorant l'ergonomie du poste 102 pour l'opérateur.

L'activation de l'un des premiers modes de fonctionnement en réponse à la détection du regard de l'opérateur en direction d'un élément graphique actif 114A permet de minimiser le nombre d'opérations nécessaires à l'opérateur pour interagir la pluralité de mobiles que le poste 102 à vocation à contrôler. En conséquence, les traitements réalisés par les éléments de traitement 109 pour la réalisation des fonctions correspondantes sont simplifiés. En outre, ceci a pour effet que le poste 102 présente une ergonomie améliorée pour l'opérateur.

La présence de la surface tactile 122 a également pour effet de minimiser le nombre d'équipements requis pour que l'opérateur puisse interagir avec le poste 102. Le coût du poste 102 est minimisé et son ergonomie est améliorée plus avant.

Par ailleurs, la tablette 124 permet également de minimiser le nombre d'équipements que le poste 102 comprend.

En outre, les conditions de déclenchement du deuxième mode de fonctionnement du poste 102 permettent de simplifier le fonctionnement du poste 102. De même, l'ergonomie du poste est améliorée pour l'opérateur 110, dans la mesure où le poste 102, et en particulier l'oculomètre 106, présente un fonctionnement transparent pour ce dernier. En particulier, l'opérateur 110 n'a pas à modifier le comportement naturel de son regard pour manipuler le poste 102.

Les fonctionnalités du premier ensemble de fonctionnalités permettent de rendre le poste 102 adaptable à chaque opérateur, dans la mesure où l'opérateur a accès à des fonctions de modification de la disposition des flux vidéo 112 sur le dispositif 104. En outre, les traitements réalisés par les éléments de traitement 109 sont minimisés dans le cas d'une interaction de l'opérateur avec un flux vidéo 112, puisque le poste 102 n'impose pas à l'opérateur d'interagir avec des commandes spécifiquement dédiées à l'orientation de la caméra embarquée à bord des mobiles, telles que par exemple un joystick physique dédié, ou encore un joystick virtuel situé au niveau de l'interface de commande 108. Ces avantages s'appliquent également à la fonctionnalité de basculement entre deux modes de fonctionnement d'un mobile.

Par ailleurs, les gestes permettant le déclenchement des fonctionnalités des ensembles de fonctionnalités sont simples à réaliser. Ils permettent à la fois d'améliorer l'ergonomie du poste 102, mais aussi de simplifier le traitement réalisé par les éléments de traitement 109 pour la mise en œuvre du poste 102.

Dans certains modes de réalisation, les éléments graphiques actifs 114A comprennent, pour chaque mobile contrôlé par le poste 102, un plan de navigation 137 en surimpression sur la carte 120. Un plan de navigation 137 se présente par exemple sous la forme d'un tracé sur la carte 120.

En outre, la tablette 124 est configurée pour l'affichage d'une carte géographique 38. Par exemple, la carte 120 est une sous partie de la carte géographique 138 et est centrée sur le mobile associé à un flux vidéo donné.

Les fonctionnalités associées au premier mode de fonctionnement relatif à un plan de navigation 137 comprennent des fonctionnalités de modification du plan de navigation 137. Par exemple, l'une de ces fonctionnalités est mise en œuvre par la sélection tactile par l'opérateur d'un ou plusieurs emplacements de la carte géographique 138. Ces emplacements seront alors intégrés au plan de navigation 137 correspondant.

Dans certains modes de réalisation, les éléments graphiques actifs 114A comprennent des barres temporelles 140 respectivement associées à l'un des flux vidéo 112 et sur lesquelles figurent des évènements 142 associés au fonctionnement du mobile correspondant.

Les évènements 142 sont par exemple représentatifs de la détection par le mobile correspondant d'une cible dans son champ d'observation, de l'instant de basculement entre des modes de fonctionnement sous l'action de l'opérateur 110, etc.

Une fonctionnalité associée à un évènement 142 est par exemple l'affichage sur le flux vidéo 112, par exemple en incrustation ou en médaillon, des images du flux vidéo 112 à l'instant correspondant, ou encore le déplacement sur la barre temporelle 140 d'un évènement 142.

En outre, les éléments graphiques actifs 114A comprennent des barres horaires 144 fournissant une échelle de lecture de barres temporelles 140 sur lesquelles figurent les évènements 142.

Par exemple, une fonctionnalité associée aux barres horaires 144 est la modification de l'échelle temporelle correspondante.

Dans certains modes de réalisation, les éléments de traitement 109 sont configurés pour déclencher un troisième mode de fonctionnement du poste 102 en réponse à la détection simultanée:
- du regard de l'opérateur dans la direction du dispositif 104, et
- du fait qu'aucun premier mode de fonctionnement n'est actif.

Dans le troisième mode de fonctionnement du poste 102, aucune des fonctionnalités des premiers modes de fonctionnement et du deuxième mode de fonctionnement n'est déclenchable, en particulier par l'interface de commande 108.

En pratique, le troisième mode de fonctionnement correspond à un mode de fonctionnement transitoire entre deux premiers modes de fonctionnement du poste 102 ou entre un premier mode de fonctionnement et le deuxième mode de fonctionnement du poste 102.

## Revendications

1. Procédé de contrôle d'un système de détection et de suivi (10) d'une cible (12), le système (10) comprenant au moins un mobile (16) autonome sans pilote muni d'au moins une caméra (20A, 20B) propre à acquérir une image de la cible (12), le procédé comportant les étapes de :
- fourniture d'au moins un paramètre, chaque paramètre étant relatif à l'un parmi le système (10), la cible et l'environnement du système (10),
- sélection d'un algorithme parmi une pluralité d'algorithmes de détection et de suivi d'une cible en fonction dudit au moins un paramètre fourni pour obtenir un algorithme sélectionné,
- mise en œuvre de l'algorithme sélectionné pour obtenir une première loi de commande (L1) de ladite au moins une caméra (20A, 20B) et une deuxième loi de commande (L2) dudit au moins un mobile (16) autonome, et
- contrôle de ladite au moins une caméra (20A, 20B) et dudit au moins un mobile (16) en fonction de la première loi de commande (L1) et de la deuxième loi de commande (L2),
une orientation souhaitée pour le mobile (16) étant fournie et une orientation voulue de ladite au moins une caméra (20A, 20B) étant fournie, la deuxième loi de commande (L2) dudit au moins un mobile (16) obtenue prend en compte la différence entre l'orientation voulue de ladite au moins une caméra (20A, 20B) et l'orientation souhaitée, **caractérisé en ce que** la deuxième loi de commande (L2) correspond au résultat d'un filtrage de la différence entre l'orientation voulue de ladite au moins une caméra (20A, 20B) et l'orientation souhaitée du mobile (16), un filtre de Kalman étant utilisé lors du filtrage.

2. Procédé selon la revendication 1, dans lequel la première loi de commande (L1) de ladite au moins une caméra (20A, 20B) est propre à maintenir la cible (12) au centre de l'image acquise par ladite au moins une caméra (20A, 20B).

3. Procédé selon la revendication 1 ou 2, dans lequel le ou les paramètres relatifs au système (10) sont choisis dans un groupe constitué des paramètres relatifs audit au moins un mobile (16), par exemple la nature du mobile (16) et les données de navigation, et des paramètres relatifs à ladite au moins une caméra (20A, 20B).

4. Procédé selon l'une quelconque des revendications 1 à 3, dans lequel le ou les paramètres relatifs à la cible (12) comportent la nature de la cible (12) et des paramètres relatifs au mouvement éventuel de la cible (12).

5. Procédé selon l'une quelconque des revendications 1 à 4, dans lequel le ou les paramètres relatifs à l'environnement du système (10) sont des paramètres relatifs à la nature de l'environnement du système (10) ou des données météorologiques de l'environnement du système (10).

6. Programme d'ordinateur comportant des instructions de code de programmation aptes à être mises en œuvre par un ordinateur, dans lequel le programme est apte à mettre en œuvre le procédé de contrôle selon l'une quelconque des revendications 1 à 5.

7. Poste de contrôle (14, 102) d'un système (10) de détection et de suivi d'une cible (12), le système (10) comportant au moins un mobile (16) autonome sans pilote et au moins une caméra (20A, 20B) propre à acquérir une image de la cible (12), le poste de contrôle (14) comportant :
- une unité de saisie (22) d'au moins un paramètre relatif audit au moins un mobile (16), à la cible (12) ou à ladite au moins une caméra (20A, 20B),
- un contrôleur (24) propre à mettre en œuvre les étapes de :
- sélection d'un algorithme parmi une pluralité d'algorithmes de détection et de suivi d'une cible en fonction dudit au moins un paramètre fourni pour obtenir un algorithme sélectionné,
- mise en œuvre de l'algorithme sélectionné pour obtenir une première loi de commande (L1) de ladite au moins une caméra (20A, 20B) et une deuxième loi de commande (L2) dudit au moins un mobile (16) autonome, et
- contrôle de ladite au moins une caméra (20A, 20B) et dudit au moins un mobile (16) en fonction de la première loi de commande (L1) et de la deuxième loi de commande (L2),
une orientation souhaitée pour le mobile (16) étant fournie et une orientation voulue de ladite au moins une caméra (20A, 20B) étant fournie, la deuxième loi de commande (L2) dudit au moins un mobile (16) obtenue prend en compte la différence entre l'orientation voulue de ladite au moins une caméra (20A, 20B) et l'orientation souhaitée, **caractérisé en ce que** la deuxième loi de commande (L2) correspond au résultat d'un filtrage de la différence entre l'orientation voulue de ladite au moins une caméra (20A, 20B) et l'orientation souhaitée du mobile (16), un filtre de Kalman étant utilisé lors du filtrage.

8. Poste de contrôle (102) selon la revendication 7, comprenant en outre :
- un dispositif d'affichage (104) configuré pour l'affichage d'éléments graphiques dont des éléments graphiques actifs (114A) configurés pour l'interaction d'un opérateur avec le poste de contrôle (102) et/ou un ou plusieurs mobiles,
- une interface de commande (108) pour la saisie par l'opérateur de commandes à destination du poste de contrôle (102), et
- un oculomètre (106) configuré pour détecter la direction du regard de l'opérateur (110),
le poste de contrôle (102) étant configuré pour sélectivement activer l'un d'une pluralité de premiers modes de fonctionnement du poste de contrôle (102) respectivement associés à l'un des éléments graphiques actifs (114A) en réponse à la détection du regard de l'opérateur sur l'élément graphique actif (114) correspondant, chaque premier mode de fonctionnement étant configuré pour permettre à l'opérateur d'interagir avec un ou plusieurs éléments graphiques (114) et/ou un ou plusieurs mobiles via l'interface de commande (108) selon un ensemble de fonctionnalités donné.

9. Ensemble comportant un système (10) de détection et de suivi d'une cible (12), le système (10) comportant au moins un mobile (16) autonome sans pilote et au moins une caméra (20A, 20B) propre à acquérir une image de la cible (12) et un poste de contrôle (14, 102) selon la revendication 7 ou 8, le poste de contrôle (14, 102) étant propre à contrôler le système (10) de l'ensemble.

## Patentansprüche

1. Verfahren zum Steuern eines Systems (10) zur Erkennung und Überwachung eines Ziels (12), wobei das System (10) mindestens ein führerloses autonomes Fahrzeug (16) umfasst, das mit mindestens einer Kamera (20A, 20B), die zur Erfassung eines Bildes des Ziels (12) geeignet ist, ausgestattet ist, wobei das Verfahren die Schritte umfasst:
- - Vorsehen mindestens eines Parameters, wobei sich jeder Parameter auf eines des Systems (10), des Ziels und der Umgebung des Systems (10) bezieht,
- Auswählen eines Algorithmus aus einer Mehrzahl Algorithmen zur Erkennung und Überwachung eines Ziels in Abhängigkeit mindestens eines vorgesehen Parameters, um einen ausgewählten Algorithmus zu erhalten,
- Ausführen des ausgewählten Algorithmus, um eine erste Steuerungsart (L1) der mindestens einen Kamera (20A, 20B) und eine zweite Steuerungsart (L2) des mindestens einen autonomen Fahrzeugs (16) zu erhalten, und
- Steuern der mindestens einen Kamera (20A, 20B) und des mindestens einen Fahrzeugs (16) gemäß der ersten Steuerungsart (L1) und der zweiten Steuerungsart (L2), wobei eine gewünschte Orientierung des Fahrzeugs (16) und eine gewünschte Orientierung der mindestens einen Kamera (20A, 20B) vorgesehen sind, wobei die erhaltene zweite Steuerungsart (L2) des mindestens einen Fahrzeugs (16) den Unterschied zwischen der gewünschten Orientierung der mindestens einen Kamera (20A, 20B) und der gewünschten Orientierung berücksichtigt, **dadurch gekennzeichnet, dass** die zweite Steuerungsart (L2) einem Filtern des Unterschieds zwischen der gewünschten Orientierung der mindestens einen Kamera (20A, 20B) und der gewünschten Orientierung des Fahrzeugs (16) entspricht, wobei beim Filtern ein Kalman-Filter verwendet wird.

2. Verfahren nach Anspruch 1, wobei die erste Steuerungsart (L1) der mindestens einen Kamera (20A, 20B) dazu geeignet ist, das Ziel (12) im Mittelpunkt des von der mindestens einen Kamera (20A, 20B) aufgenommenen Bildes zu halten.

3. Verfahren nach Anspruch 1 oder 2, wobei der mindestens eine Parameter des Systems (10) aus folgender Gruppe gewählt sind: Parameter, die sich auf das mindestens eine Fahrzeug (16), z.B. die Art des Fahrzeugs (16), und die Navigationsdaten beziehen, und Parameter, die sich auf die mindestens eine Kamera (20A, 20B) beziehen.

4. Verfahren nach einem der Ansprüche 1 - 3, wobei der mindestens eine Parameter, der sich auf das Ziel (12) bezieht, die Art des Ziels (12) sowie Parameter, die sich auf etwaige Bewegungen des Ziels (12) beziehen, umfasst.

5. Verfahren nach einem der Ansprüche 1 - 4, wobei es sich beim mindestens einen Parameter, der sich auf die Umgebung des Systems (10) bezieht, um Parameter handelt, die sich auf die Art der Umgebung des Systems (10) oder meterologische Daten der Umgebung des Systems (10) beziehen.

6. Computerprogramm, umfassend Programmcodebefehle, die dazu geeignet sind, von einem Computer ausgeführt zu werden, wobei das Programm dazu geeignet ist, das Steuerungsverfahren nach einem der Ansprüche 1 - 5 auszuführen.

7. Kontrollstelle (14, 102) eines Systems (10) zur Erkennung und Überwachung eines Ziels (12), wobei das System (10) mindestens ein führerloses autonomes Fahrzeug (16) und mindestens eine Kamera (20A, 20B), die zur Erfassung eines Bildes des Ziels (12) geeignet ist, umfasst, wobei die Kontrollstelle umfasst:
- eine Einheit (22) zur Erfassung mindestens eines Parameters, der sich auf das mindestens eine Fahrzeug (16), auf das Ziel (12) oder die mindestens eine Kamera (20A, 20B) bezieht,
- eine Steuerung (24), die dazu geeignet ist, folgende Schritte auszuführen:
- Auswählen eines Algorithmus aus einer Mehrzahl Algorithmen zur Erkennung und Überwachung eines Ziels in Abhängigkeit mindestens eines vorgesehen Parameters, um einen ausgewählten Algorithmus zu erhalten,
- Ausführen des ausgewählten Algorithmus, um eine erste Steuerungsart (L1) der mindestens einen Kamera (20A, 20B) und eine zweite Steuerungsart (L2) des mindestens einen autonomen Fahrzeugs (16) zu erhalten, und
- Steuern der mindestens einen Kamera (20A, 20B) und des mindestens einen Fahrzeugs (16) gemäß der ersten Steuerungsart (L1) und der zweiten Steuerungsart (L2),
wobei eine gewünschte Orientierung des Fahrzeugs (16) und eine gewünschte Orientierung der mindestens einen Kamera (20A, 20B) vorgesehen sind, wobei die erhaltene zweite Steuerungsart (L2) des mindestens einen Fahrzeugs (16) den Unterschied zwischen der gewünschten Orientierung der mindestens einen Kamera (20A, 20B) und der gewünschten Orientierung (sic!) berücksichtigt, **dadurch gekennzeichnet, dass** die zweite Steuerungsart (L2) einem Filtern des Unterschieds zwischen der gewünschten Orientierung der mindestens einen Kamera (20A, 20B) und der gewünschten Orientierung des Fahrzeugs (16) entspricht, wobei beim Filtern ein Kalman-Filter verwendet wird.

8. Kontrollstelle (102) nach Anspruch 7, ferner umfassend:
- eine Anzeige (104), die zum Anzeigen von Graphikelementen, insbesondere von aktiven Graphikelementen (114A), die derart konfiguriert sind, dass ein Bediener mit der Kontrollstelle (102) und/oder mindestens einem Fahrzeug in Interaktion treten kann, konfiguriert ist,
- Kommandoschnittstelle (108), um dem Bediener die Eingabe von Befehlen an die Kontrollstelle (102) zu ermöglichen, und
- ein Augenmeßgerät (106), das zur Erkennung der Blickrichtung des Bedieners (110) konfiguriert ist,
wobei die Kontrollstelle (102) derart konfiguriert ist, dass sie als reaktion auf den Blick des Bedieners auf das entsprechende aktive Graphikelement (114) selektiv einen einer Mehrzahl Betriebsmodi der Kontrollstelle (102) aktiviert, die jeweils einem der aktiven Graphikelemente (114A) zugeordnet sind, wobei jeder erste Betriebsmodus derart konfiguriert ist, dass er dem Bediener ermöglicht, über die Kommandschnittstelle (108) gemäß einer vorgegebenen Gruppe von Funktionalitäten mit mindestens einem Graphikelement (114) und/oder mindestens einem Fahrzeug zu interagieren.

9. Einrichtung, umfassend ein System (10) zur Erkennung und Überwachung eines Ziels (12), wobei das System (10) mindestens ein führerloses autonomes Fahrzeug (16) und mindestens eine Kamera (20A, 20B), die zur Erfassung eines Bildes des Ziels (12) geeignet ist, und eine Kontrollstelle (14, 102) nach Anspruch 7 oder 8 umfasst, wobei die Kontrollstelle (14,102) zur Steuerung des Systems (10) der Einrichtung geeignet ist.

## Claims

1. A method for controlling a system for detecting and tracking (10) a target (12), the system (10) comprising at least one unmanned autonomous moving object (16) provided with at least one camera (20A, 20B) capable of acquiring an image of the target (12), the method including the steps of:
- providing at least one parameter, each parameter relating to one among the system (10), the target and the environment of the system (10),
- selecting an algorithm among a plurality of algorithms for detecting and tracking a target as a function of said at least one provided parameter in order to obtain a selected algorithm,
- implementing the selected algorithm in order to obtain a first control law (L1) of said at least one camera (20A, 20B) and a second control law (L2) of said at least one autonomous moving object (16), and
- controlling said at least one camera (20A, 20B) and said at least one moving object (16) as a function of the first control law (L1) and the second control law (L2),
a desired orientation for the moving object (16) being provided and a wanted orientation of said at least one camera (20A, 20B) being provided, the second control law (L2) of said at least one obtained moving object (16) taking account of the difference between the wanted orientation of said at least one camera (20A, 20B) and the desired orientation, **characterized in that** the second control law (L2) corresponds to the result of a filtering of the difference between the wanted orientation of said at least one camera (20A, 20B) and the desired orientation of the moving object (16), a Kalman filter being used during the filtering.

2. The method according to claim 1, wherein the first control law (L1) of said at least one camera (20A, 20B) is able to keep the target (12) at the center of the image acquired by said at least one camera (20A, 20B).

3. The method according to claim 1 or 2, wherein the parameter(s) relative to the system (10) are chosen in a group made up of parameters relative to said at least one moving object (16), for example the nature of the moving object (16) and the navigation data, and parameters relative to said at least one camera (20A, 20B).

4. The method according to any one of claims 1 to 3, wherein the parameter(s) relative to the target (12) include the nature of the target (12) and parameters relative to any movement of the target (12).

5. The method according to any one of claims 1 to 4, wherein the parameter(s) relative to the environment of the system (10) are parameters relative to the nature of the environment of the system (10) or meteorological data of the environment of the system (10).

6. A computer program including program code instructions able to be carried out by a computer, wherein the program is able to carry out the control method according to any one of claims 1 to 5.

7. A control station (14, 102) of a system (10) for detecting and tracking a target (12), the system (10) including at least one unmanned autonomous moving object (16) and at least one camera (20A, 20B) able to acquire an image of the target (12), the control station (14) including:
- an entry unit (22) for at least one parameter relative to said at least one moving object (16), the target (12) or said at least one camera (20A, 20B),
- a controller (24) able to carry out the steps of:
- selecting an algorithm among a plurality of detection and tracking algorithms of a target as a function of said at least one parameter provided in order to obtain a selected algorithm,
- implementing the selected algorithm in order to obtain a first control law (L1) of said at least one camera (20A, 20B) and a second control law (L2) of said at least one autonomous moving object (16), and
- controlling said at least one camera (20A, 20B) and said at least one moving object (16) as a function of the first control law (L1) and the second control law (L2),
a desired orientation for the moving object (16) being provided and a wanted orientation for said at least one camera (20A, 20B) being provided, the obtained second control law (L2) of said at least one moving object (16) takes account of the difference between the wanted orientation of said at least one camera (20A, 20B) and the desired orientation, **characterized in that** the second control law (L2) corresponds to the result of a filtering of the difference between the wanted orientation of said at least one camera (20A, 20B) and the desired orientation of the moving object (16), a Kalman filter being used during the filtering.

8. The control station (102) according to claim 7, further comprising:
- a display device (104) configured to display graphic elements, including active graphic elements (114A) configured for the interaction of an operator with the control station (102) and/or one or several moving objects,
- a control interface (108) for the entry by the operator of controls intended for the control station (102), and
- an oculomotor (106) configured to detect the direction of the gaze of the operator (110),
the control station (102) being configured to selectively activate one of a plurality of first operating modes of the control station (102) respectively associated with one of the active graphic elements (114A) in response to the detection of the gaze of the operator on the corresponding active graphic element (114), each first operating mode being configured to allow the operator to interact with one or several graphic elements (114) and/or one or several moving objects via the control interface (108) according to a given set of functionalities.

9. An assembly including a system (10) for detecting and tracking a target (12), the system (10) including at least one unmanned autonomous moving object (16) and at least one camera (20A, 20B) able to acquire an image of the target (12) and a control station (14, 102) according to claim 7 or 8, the control station (14, 102) being able to control the system (10) of the assembly.
